# EUROPEAN PATENT APPLICATION

(11) **EP 2 853 741 A1**
(43) Date of publication of application: **01.04.2015**
(21) Application number: 14183006.7
(22) Date of filing: 01.09.2014
(51) Int. Cl.: F04B 35/04, F04D 25/06, F04B 39/12

(54) **Electric compressor**

(30) Priority: 03.09.2013 JP 2013182250
(71) Applicant: KABUSHIKI KAISHA TOYOTA JIDOSHOKKI, Kariya-shi, Aichi 448-8671 (JP)
(72) Inventor: Yano, Junya, Kariya-shi,, Aichi 448-8671 (JP); Suitou, Ken, Kariya-shi,, Aichi 448-8671 (JP); Kuroki, Kazuhiro, Kariya-shi,, Aichi 448-8671 (JP)
(74) Representative: TBK

(57) **Abstract**

An electric compressor (110) capable of discharging electric charges of a capacitor (C1, C2) is provided. The electric compressor (110) includes: a compressing unit (115); an electric motor (116) for rotating the compressing unit (115); a driving circuit (100) for driving the electric motor (116); a housing (112) for accommodating the compressing unit (115) and the electric motor (116); and an inverter cover (144) for accommodating the driving circuit (100). An outline of the electric compressor (110) is formed by the housing (112) and the inverter cover (144). The driving circuit (100) includes: an inverter circuit (14) for receiving electric power from a power supply line (PL); a capacitor circuit (4) connected between the power supply line (PL) and a ground line (SL); and an electrically discharging circuit, connected to the capacitor circuit (4), for discharging electric charges accumulated in the capacitor circuit (4). The electric compressor (110) further includes a capacitor cover (201), disposed inside the inverter cover (144), for encompassing and accommodating at least the capacitor circuit (4) and the electrically discharging circuit.

## Description

This nonprovisional application is based on Japanese Patent Application No. 2013-182250 filed on September 3, 2013, with the Japan Patent Office, the entire contents of which are hereby incorporated by reference.

### BACKGROUND OF THE INVENTION

### Field of the Invention

The present disclosure relates to an electric compressor, in particular, an electric compressor in which a driving circuit for driving an electric motor is incorporated.

### Description of the Background Art

In recent years, as a compressor provided in a vehicle such as a hybrid vehicle, an electric vehicle, a fuel cell vehicle or the like, there has been developed an electric compressor in which a driving circuit for driving an electric motor is incorporated for size reduction. In such an electric compressor, an inverter unit is attached to a housing with the electric motor and a compressor mechanism.

When a vehicle such as an automobile collides with an obstacle or the like and large force is applied to the electric compressor, the driving circuit for driving the electric motor accommodated in the inverter unit may be damaged to result in electrical leakage from a capacitor having a relatively large amount of electric charges stored therein. Therefore, a technique to prevent the electrical leakage is disclosed.

For example, Japanese Patent Laying-Open No. 2010-148296 discloses an electric compressor in which a compressor mechanism and a motor for driving the compressor mechanism are accommodated in a housing and an inverter for controlling driving of the motor is provided in a portion of the housing. In the electric compressor, the inverter including at least one capacitor and other electrical components which are mounted on a circuit board is accommodated in an inverter case fixed to the housing. In the electric compressor, an electrically discharging member is disposed to face the capacitor with a space between the electrically discharging member and the capacitor.

However, when a vehicle collides with an obstacle or the like, there are many forms of collisions and it is difficult to predict direction and angle of an impact applied to the electric compressor. According to the technique disclosed in Japanese Patent Laying-Open No. 2010-148296, the electrically discharging member may not come into the capacitor properly depending on forms of collision. Therefore, the technique may cause problems such that the electric charges of the capacitor are not discharged or it takes a long time until discharging of the electric charges completes, and the like.

### SUMMARY OF THE INVENTION

The present disclosure has been made to solve the aforementioned problems, and one object in an aspect thereof is to provide an electric compressor capable of discharging electric charges of a capacitor surely and quickly in the event of an impact.

An electric compressor in accordance with an embodiment includes: a compressing unit; an electric motor for rotating the compressing unit; a driving circuit for driving the electric motor; a housing for accommodating the compressing unit and the electric motor; and an inverter cover for accommodating the driving circuit. An outline of the electric compressor is formed by the housing and the inverter cover. The driving circuit includes: an inverter circuit for receiving electric power from a power supply line; a capacitor connected between the power supply line and a ground line; and an electrically discharging circuit, connected to the capacitor, for discharging electric charges accumulated in the capacitor. The electric compressor further includes a capacitor cover, disposed inside the inverter cover, for encompassing and accommodating at least the capacitor and the electrically discharging circuit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing an entire configuration of an electric compressor according to the present embodiment.
Fig. 2 is a circuit diagram of a driving circuit that drives an electric compressor motor.
Fig. 3 shows a lamination structure within an inverter unit.
Fig. 4 is a schematic cross sectional view of a VI-VI portion in Fig. 3.
Fig. 5 is another example of the schematic cross sectional view of the VI-VI portion in Fig. 3.
Fig. 6A illustrates a position of a cutting line α formed on a circuit board.
Fig. 6B illustrates the position of the cutting line α formed on the circuit board.

### DESCRIPTION OF THE PREFERRED EMBODIMENTS

The following describes the present embodiment in detail with reference to figures. It should be noted that the same or corresponding portions in the figures are given the same reference characters and are not described repeatedly.

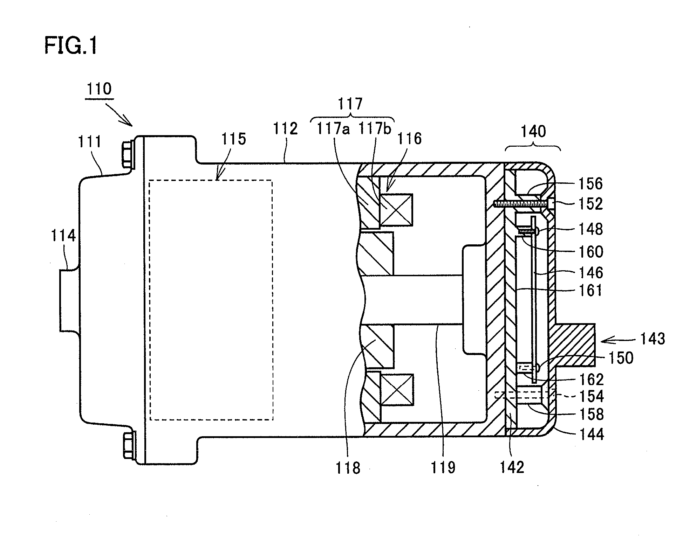

Referring to Fig. 1, an entire configuration of an electric compressor according to the present embodiment is described. As shown in Fig. 1, the electric compressor 110 includes: a housing formed by joining a discharge housing 111, which has a cover-like shape and is made of aluminum (metal material), to a suction housing 112, which has a shape of cylinder with a bottom and is made of aluminum (metal material); a compressing unit 115 and an electric motor 116, which are accommodated in the suction housing 112; and an inverter unit 140 attached to the suction housing 112 such that the inverter unit 140 is incorporated with the suction housing 112. An outline of the electric compressor 110 is formed by the housing and an inverter cover 144 of the inverter unit 140.

A suction port (not shown) is formed at the bottom portion side of the circumferential wall of the suction housing 112. An external coolant circuit (not shown) is connected to the suction port. A discharge port 114 is formed at the cover side of the discharge housing 111. The discharge port 114 is connected to the external coolant circuit. Accommodated in the suction housing 112 are: the compressing unit 115 for compressing coolant; and the electric motor 116 for driving the compressing unit 115. Although not shown in the figure, for example, the compressing unit 115 is configured to include a fixed scroll fixed in the suction housing 112 and a movable scroll disposed to face the fixed scroll.

A stator 117 is fixed on the inner circumferential surface of the suction housing 112. The stator 117 includes: a stator core 117a fixed to the inner circumferential surface of the suction housing 112; and coils 117b wound around teeth (not shown) of the stator core 117a.

In the suction housing 112, a rotating shaft 119, which is inserted in the stator 117, is rotatably supported. A rotor 118 is fixed to the rotating shaft 119.

The inverter unit 140 is provided on the suction housing 112 at its external surface opposite to the discharge housing 111. The inverter unit 140 includes an aluminum base 142, a circuit board 146, and the inverter cover 144.

The inverter cover 144 covers the circuit board 146 to protect it from contamination, humidity, and the like. The inverter cover 144 is preferably formed of a resin for weight reduction. More preferably, the inverter cover 144 is formed by disposing a metal plate in the resin so as to suppress emission of generated electromagnetic noise from the circuit board 146 to outside. The inverter cover 144 is fixed to the suction housing 112 by screws 152, 154 at both sides with legs 156, 158 interposed therebetween. The legs 156, 158 are formed in the bottom plate 161 of the aluminum base 142. In the inverter cover 144, a power supply input port 143 having a cylindrical shape is formed to be supplied with a DC power supply voltage from outside.

The circuit board 146 is accommodated in an accommodation space between the inverter cover 144 and the aluminum base 142 such that the mounting surface of the circuit board 146 is orthogonal to the axial direction of the rotating shaft 119. In the present embodiment, the compressing unit 115, the electric motor 116, and the inverter unit 140 are arranged side by side in this order in the axial direction of the rotating shaft 119.

The aluminum base 142 is fastened to the suction housing 112 using the screws 152, 154. The aluminum base 142 and the suction housing 112 are each made of metal having good heat conductivity and are in close contact with each other. Hence, the aluminum base 142 serves to dissipate heat from the inverter unit 140 by conducting the heat in the inverter unit 140 to the suction housing 112.

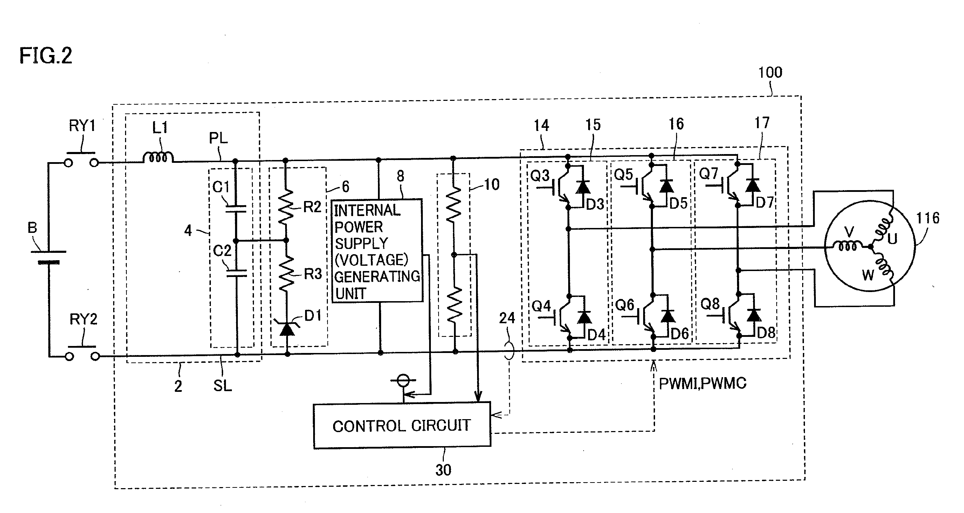

The circuit board 146 is fixed by screws 148, 150 to legs 160, 162 formed in the bottom plate 161 of the aluminum base 142, with a space between the circuit board 146 and the bottom plate 161. In the space therebetween, a driving control circuit (inverter circuit) for the electric motor 116 as well as an electromagnetic coil L1 and a capacitor circuit 4, which form a below-described filter circuit shown in Fig. 2, are accommodated. The driving control circuit is mounted on the circuit board 146.

The electric power controlled by the inverter unit 140 is supplied to the electric motor 116, thereby rotating the rotor 118 and the rotating shaft 119 at a controlled rotational speed. By this rotation, the compressing unit 115 is driven. By driving the compressing unit 115, the coolant is suctioned from the external coolant circuit into the suction housing 112 via the suction port, the coolant thus suctioned into the suction housing 112 is compressed by the compressing unit 115, and the compressed coolant is discharged to the external coolant circuit via the discharge port 114.

Referring to Fig. 2, the driving circuit that drives the electric compressor motor is described. As shown to Fig. 2, the driving circuit 100 includes: the electromagnetic coil L1 and the capacitor circuit 4; an inverter circuit 14; a bleeder resistance circuit 6; an internal power supply voltage generating unit 8; a resistance circuit 10; and a control circuit 30.

The inverter circuit 14 includes a U phase arm 15, a V phase arm 16, and a W phase arm 17, each of which is connected between a positive electrode bus PL and a negative electrode bus SL.

The U phase arm 15 includes: transistors Q3, Q4 connected in series between the positive electrode bus PL and the negative electrode bus SL; and diodes D3, D4 respectively connected in anti-parallel with the transistors Q3, Q4. A connection node of the transistors Q3, Q4 is connected to one end of the U phase coil of the stator of the electric motor 116.

The V phase arm 16 includes: transistors Q5, Q6 connected in series between the positive electrode bus PL and the negative electrode bus SL; and diodes D5, D6 respectively connected in anti-parallel with the transistors Q5, Q6. A connection node of the transistors Q5, Q6 is connected to one end of the V phase coil of the stator of the electric motor 116.

The W phase arm 17 includes: transistors Q7, Q8 connected in series between the positive electrode bus PL and the negative electrode bus SL; and diodes D7, D8 respectively connected in anti-parallel with the transistors Q7, Q8. A connection node of the transistors Q7, Q8 is connected to one end of the W phase coil of the stator of the electric motor 116.

The other end of each of the U phase coil, the V phase coil, and the W phase coil of the stator of the electric motor 116 is connected to a neutral point.

Examples of the transistors Q3 to Q8 used herein include semiconductor transistors such as insulated gate bipolar transistors and electric field effect transistors.

By controlling switching of the transistors Q3 to Q8, a three-phase alternating current is output from the inverter circuit 14 to the stator coils of the electric motor 116.

The inverter circuit 14 is supplied with a DC voltage from a DC power supply B via relays RY1, RY2 and a low-pass filter circuit 2.

The electromagnetic coil L1 and the capacitor circuit 4 are included in the low-pass filter circuit 2. The low-pass filter circuit 2 suppresses passage of high-frequency component of the voltage from the DC power supply B to the inverter circuit 14, and suppresses passage of high-frequency component of the voltage from the inverter circuit 14 to the DC power supply B side. The high-frequency component of the voltage refers to a voltage component having a frequency equal to or higher than a predetermined value. The predetermined value is a cutoff frequency determined from the electromagnetic coil L1 and the capacitor circuit 4.

The electromagnetic coil L1 is connected between the positive electrode of the DC power supply B and the positive electrode bus PL. The capacitor circuit 4 is connected between the positive electrode bus PL and the negative electrode bus SL.

The capacitor circuit 4 includes capacitors C1 and C2 connected in series between the positive electrode bus PL and the negative electrode bus SL.

The bleeder resistance circuit 6 is provided to suppress variation in a ratio between voltages held by the capacitors C1, C2. The bleeder resistance circuit 6 includes resistors R2, R3 and a Zener diode D1 connected in series between the positive electrode bus PL and the negative electrode bus SL. A connection node of the resistors R2, R3 is connected to the connection node of the capacitors C1, C2.

The internal power supply voltage generating unit 8 generates an internal power supply voltage used in the control circuit 30. The resistance circuit 10 divides the voltage using resistance elements connected in series between the positive electrode bus PL and the negative electrode bus SL so as to decrease it to a voltage that can be monitored by the control circuit 30, and outputs the divided voltage to the control circuit 30.

A current sensor 24 detects a current flowing in the negative electrode bus SL. The current flowing in the negative electrode bus SL is obtained by superimposing a W phase current, a V phase current, and a U phase current. The W phase current is a current flowing in the W phase coil. The V phase current is a current flowing in the V phase coil. The U phase current is a current flowing in the U phase coil.

The control circuit 30 includes a CPU (Central Processing Unit) and the like and executes a computer program that controls driving of the electric motor 116.

It should be noted that the DC power supply B in the present embodiment may supply electric power to a three-phase motor for traveling in addition to the electric motor 116. The three-phase motor for traveling performs a power running operation for driving wheels of a hybrid vehicle or an electric vehicle, and a regenerative operation for generating electric power using rotational force of the driving wheels.

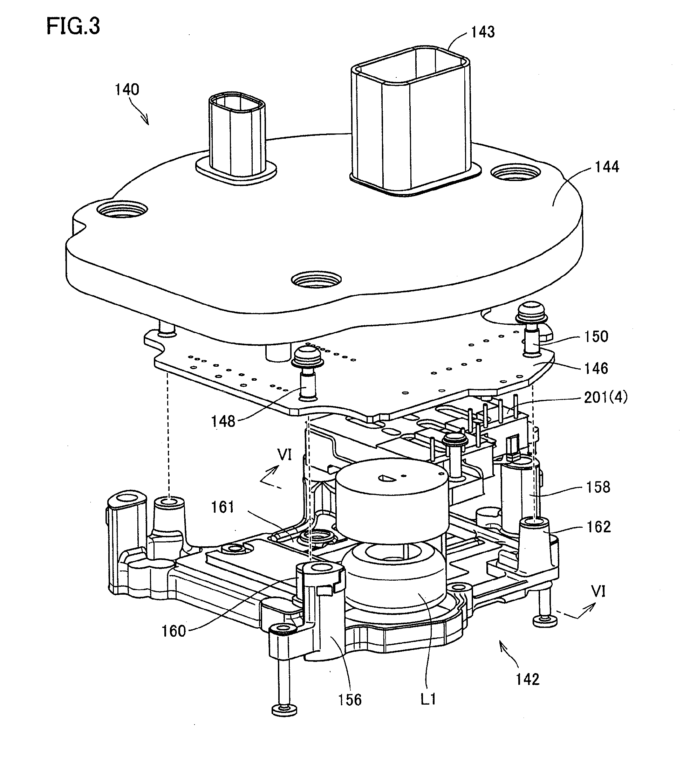

Referring to Fig. 3, a lamination structure within the inverter unit 140 is described. As shown to Fig. 3, the inverter cover 144 covers the circuit board 146, which is fixed above the aluminum base 142, to protect the circuit board 146. Onto the circuit board 146, each of leads of the electromagnetic coil L1 and the capacitor circuit 4 included in the filter circuit 2 is soldered and mounted.

The aluminum base 142 includes the bottom plate 161 and the legs 156, 158, 160, 162 provided in the bottom plate 161. The circuit board 146 is attached to the legs 160, 162 by the screws 148, 150. The inverter cover 144 is attached to the legs 156, 158 by screws (not shown).

In the bottom plate 161 of the aluminum base 142, a depression is formed in conformity with the shape of the electromagnetic coil L1 and a depression is formed in conformity with the shape of the capacitor cover 201 for the accommodating capacitor circuit 4. By providing the depressions in the aluminum base 142 in this way, the electromagnetic coil L1 and the capacitor circuit 4 can be brought into close contact with the aluminum base 142. Accordingly, heat generated in the filter circuit 2 can be dissipated from the aluminum base 142 to the housing.

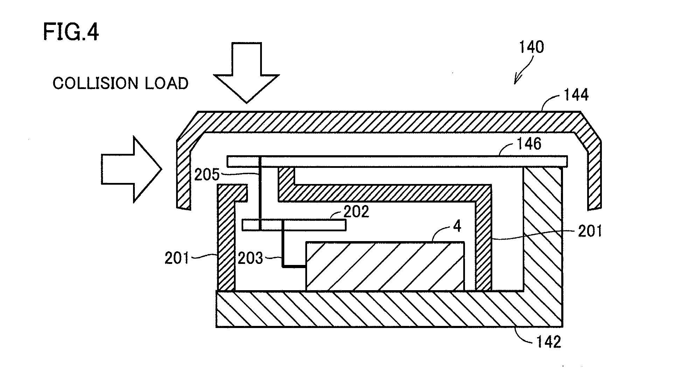

The capacitor cover 201 accommodates the capacitor circuit 4 and an electrically discharging circuit described later in Fig. 4. Specifically, the capacitor cover 201 is a protective case for protecting these electrical components from external force. The capacitor cover 201 has fracture strength higher than that of the housing including the suction housing 112 and the discharge housing 111 shown in Fig. 1, and that of the inverter cover 144. For example, the capacitor cover 201 is made of iron material.

Referring to Fig. 4, a schematic cross section of a VI-VI portion in Fig. 3 is described. As shown in Fig. 4, the capacitor cover 201 accommodates the capacitor circuit 4 and the circuit board 202 on which the electrically discharging circuit is mounted to discharge the electric charges accumulated in the capacitor circuit 4. For example, referring to Fig. 2, the electrically discharging circuit is the bleeder resistance circuit 6 connected in parallel with the capacitor circuit 4 and the inverter circuit 14. In Fig. 4, it is noted that a lower side of the capacitor circuit 4 is in close contact with the aluminum base 142 and is not encompassed by the capacitor cover 201, but the capacitor cover 201 may be formed to encompass the lower side of the capacitor circuit 4.

To secure an insulation property between each of the circuit board 202 and the capacitor circuit 4 and the capacitor cover 201, these circuits are fixed with a space between each circuit and a surface of the capacitor cover 201. Alternatively, an insulation sheet for securing an insulation property may be bonded to the surface of the capacitor cover 201.

It is noted that the capacitor cover 201 may encompass at least the capacitor circuit 4 and the electrically discharging circuit, and, for example, the capacitor cover 201 may encompass the electromagnetic coil L1 included in the filter circuit 2 in addition to the capacitor circuit 4 and the electrically discharging circuit.

The circuit board 146 having the inverter circuit 14 mounted thereon is disposed outside the capacitor cover 201. The inverter cover 144 is formed to cover the circuit board 146 having the inverter circuit 14 mounted thereon. Specifically, the inverter cover 144 accommodates the driving circuit 100 shown in Fig. 2.

The circuit board 202 and the circuit board 146 are electrically connected to each other via a bus bar 205 which is soldered thereon. The circuit board 202 and the capacitor circuit 4 are electrically connected to each other via a bus bar 203 which is soldered thereon. It is noted that the circuit board 202 and the circuit board 146 are electrically connected to each other via the bus bar 205, and the circuit board 202 and the capacitor circuit 4 are electrically connected to each other via the bus bar 203, but the electric connection between the circuit board 202 and the circuit board 146 and the electric connection between the circuit board 202 and the capacitor circuit 4 may be attained via lead wires, respectively.

Here, when a vehicle provided with the electric compressor 110 according to the present embodiment collides with an obstacle or the like, for example, a collision load is applied to the inverter unit 140 in the directions of arrows shown in Fig. 4. Even if the inverter cover 144 is thereby deformed or fractured, it is possible to prevent damage of the circuit board 202 and the capacitor circuit 4, since the capacitor cover 201 has fracture strength higher than that of the inverter cover 144. Also, preferably, the capacitor cover 201 is attached to the aluminum base 142, and the capacitor cover 201 and the inverter cover 144 are disposed with a space therebetween. Thus, it is possible to further reduce an impact applied to the capacitor circuit 4 and the circuit board 202 which are accommodated in the capacitor cover 201.

In the event of a collision, the relays RY1, RY2 shown in Fig. 2 function by receiving a collision detection signal from a collision sensor (not shown) provided in the vehicle, whereby electric power from the DC power supply B is not supplied to the driving circuit 100. In such case, the capacitors C1, C2 (hereinafter collectively referred to as "capacitor C") have a relatively large amount of electric charges accumulated therein. Thus, from the perspective of safety, the capacitor C needs to be discharged until an applied voltage of the capacitor C reaches a desired voltage (e.g., 60 V) within a reference time (e.g., within 5 seconds). For example, it is noted that the collision sensor is a sensor used for the operation and the like for an airbag of the vehicle.

In the electric compressor 110 according to the present embodiment, since the circuit board 202 and the capacitor circuit 4 remain undamaged even in the event of such a collusion, the electric charges of the capacitor C can be surely discharged spontaneously by the electrically discharging circuit provided in the circuit board 202 as in a normal state (a state with no collusion).

It is noted that the electrically discharging circuit is the bleeder resistance circuit 6 as a specific example, but the electrically discharging circuit may further include the internal power supply voltage generating unit 8 and the resistance circuit 10 depending on a capacitance of the capacitor C. Specifically, when the capacitor C has a relatively small capacitance (e.g., when the capacitor C is a film capacitor), the bleeder resistance circuit 6 is mounted on the circuit board 202 as the electrically discharging circuit, since it takes a relatively short discharge time until the applied voltage of the capacitor C reaches the desired voltage. On the other hand, when the capacitor C has a relatively large capacitance (e.g., when the capacitor C is an electrolytic capacitor), the bleeder resistance circuit 6, the internal power supply voltage generating unit 8, and the resistance circuit 10 are mounted on the circuit board 202 as the electrically discharging circuit, since it requires a relatively long discharge time until the applied voltage of the capacitor C reaches the desired voltage.

However, it is necessary that the internal power supply voltage generating unit 8 generates internal power supply voltage in the control circuit 30 and the resistance circuit 10 outputs the divided voltage to the control circuit 30. Therefore, in a circuit design, it may be difficult that the internal power supply voltage generating unit 8 and the resistance circuit 10 are mounted on the circuit board 202 which is different from the circuit board 146 having the control circuit 30 mounted thereon.

Thus, when the capacitor C has a relatively large capacitance, an electrically discharging resistor for adjusting the discharge time may be mounted on the circuit board 202 to reduce the discharge time. For example, in a circuit diagram shown in Fig. 2, the electrically discharging resistor is connected between the bleeder resistance circuit 6 and the internal power supply voltage generating unit 8 and in parallel with the bleeder resistance circuit 6.

Thereby, in a circuit design, by using the bleeder resistance circuit 6 and the electrically discharging resistor which can readily be mounted on the circuit board 202, it is possible to reduce the discharge time of the capacitor C. The resistance value of the electrically discharging resistor is determined depending on the desired discharge time. It is noted that the electrically discharging resistor may be a variable resistor capable of adjusting the resistance value.

### (Modification)

As described above, when the vehicle collides with an obstacle, the relays RY1, RY2 function by receiving the signal from the collision sensor (not shown) and electric power supply from the DC power supply B to the driving circuit 100 is cut off. However, when the power supply line PL is branched from other electrical components such as a PCU (Power Control Unit) provided on the vehicle and comes into the driving circuit 100, the PCU and the driving circuit 100 are still electrically connected to each other even though the relays RY1, RY2 function. Therefore, electric charges left in the PCU may flow into the driving circuit 100 via the power supply line PL. Since this is a factor that inhibits the discharge of the capacitor C, the driving circuit 100 is preferably electrically cut off from the other electrical components such as the PCU in the event of a collision.

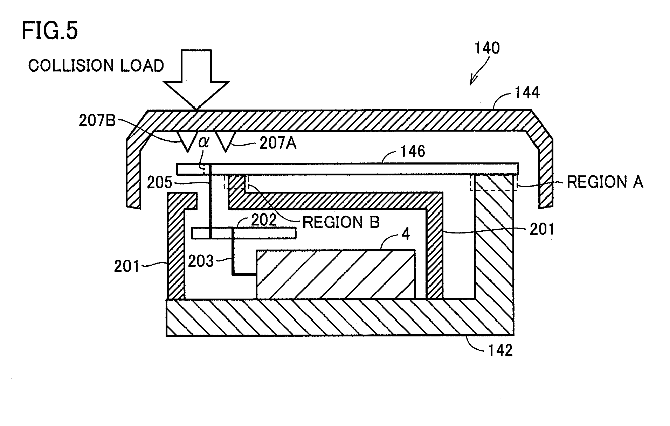

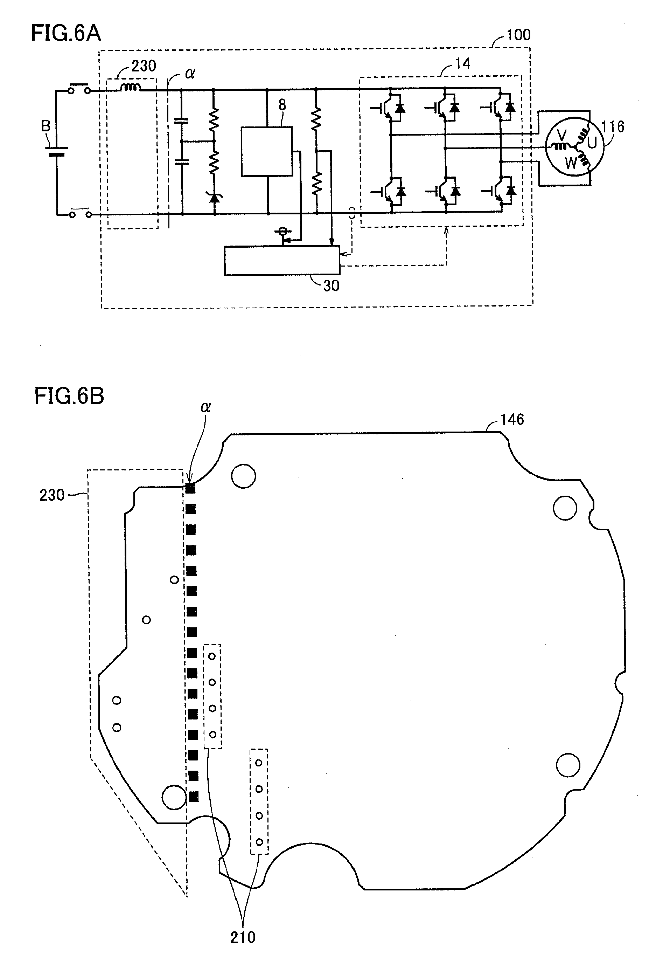

Referring to Fig. 5, another example of the schematic cross section of the VI-VI portion in Fig. 3 is described. Configurations of the inverter unit 140 shown in Fig. 5 are different from those of the inverter unit 140 shown in Fig. 4 in that protrusions 207A, 207B are provided on the inverter cover 144 and in that a cutting line α is formed on the circuit board 146, and the other configurations of the inverter unit 140 shown in Fig. 5 are identical to those of the inverter unit 140 shown in Fig. 4. Referring to Fig. 6A and Fig. 6B, a position of the cutting line α formed on the circuit board 146 is described. Specifically, referring to Fig. 6A, a position electrically cut off at the cutting line α is described using a circuit diagram of the driving circuit driving the electric compressor motor. Referring to Fig. 6B, the position cut at the cutting line α in the circuit board 146 is described.

Referring to Fig. 5, Fig. 6A, and Fig. 6B, in the circuit board 146, the cutting line α is formed between a voltage input region 230 of the DC power supply B and a region 210 on which the bus bar 205 leading to the circuit board 202 is soldered. On the inverter cover 144, the protrusions 207A, 207B are disposed at positions to face the cutting line α. The protrusions 207A, 207B are formed to project toward the circuit board 146. The protrusions 207A, 207B are made of the same material as the material of the inverter cover 144 and formed integrally with the inverter cover 144. It is noted that the protrusions 207A, 207B may be made of a material different from that of the inverter cover 144.

When a collision load is applied to the inverter unit 140 shown in Fig. 5 in the event of a collision of the vehicle with an obstacle, since the protrusions 207A, 207B are pressed downward and is brought into contact with the circuit board 146, a stress is exerted near the cutting line α. Therefore, the circuit board 146 is cut from the cutting line α as a starting point. The circuit board 146 is supported by a region A of the aluminum base 142 or a region B of the capacitor cover 201. Thereby, the stress exerted to the circuit board 146 is received and the circuit board 146 is surely cut along the cutting line α. For example, the cutting line α is a cutting line involving perforations with connection portions and is configured such that the connection portions can be cut sequentially. It is noted that the cutting line α may not be the cutting line involving perforations and may be a cutting line in the form of a groove.

Further, referring to Fig. 6A and Fig. 6B, the circuit board 146 is cut to be separated into the voltage input region 230 and the region 210 at the cutting line α. Therefore, the capacitor circuit 4 and the voltage input region 230 are electrically cut off from each other. Thereby, since the driving circuit 100 and the PCU are electrically cut off from each other in the event of a collision, it is possible to prevent the electric charges from flowing from the PCU into the capacitor C. It is noted that the position of the cutting line α is not limited to the position shown in Fig. 6B and may be a position such that the circuit board 146 is separated into the voltage input region 230 and the region 210.

Finally, referring to the figures again, the present embodiment is summarized as follows. Referring to Fig. 1, the electric compressor 110 of the present embodiment includes: the compressing unit 115; the electric motor 116 for rotating the compressing unit 115; the driving circuit 100 for driving the electric motor 116; the housing (the suction housing 112) for accommodating the compressing unit 115 and the electric motor 116; and the inverter cover 144 for accommodating the driving circuit 100. An outline of the electric compressor 110 is formed by the housing and the inverter cover 144. Referring to Figs. 1 and 2, the driving circuit 100 includes: the inverter circuit 14 for receiving electric power from the power supply line PL; the capacitor circuit 4 connected between the power supply line PL and the ground line SL; and the electrically discharging circuit, connected to the capacitor circuit 4, for discharging electric charge accumulated in the capacitor circuit 4. Referring to Figs. 3 and 4, the electric compressor 110 further includes the capacitor cover 201, disposed inside the inverter cover 144, for encompassing and accommodating at least the capacitor circuit 4 and the electrically discharging circuit.

According to the above configuration, it is possible to prevent damage of the capacitor circuit 4 and the electrically discharging circuit included in the electric compressor 110 even if the vehicle collides with an obstacle, regardless of forms of the collision. Therefore, it is possible to discharge the electric charges of the capacitor surely and quickly.

Preferably, the suction housing 112 is made of metal and the capacitor cover 201 has fracture strength higher than fracture strength of the suction housing 112.

According to the above configuration, since the capacitor cover 201 has fracture strength higher than that of the housing, it is possible to prevent damage of the capacitor circuit 4 and the electrically discharging circuit even if a collision load to break the housing is applied thereto.

Preferably, referring to Fig. 4, the capacitor cover 201 and the inverter cover 144 are disposed with a space therebetween.

According to the above configuration, since the inverter cover 144 and the capacitor cover 201 do not contact each other, it is possible to reduce an impact applied to the capacitor circuit 4 and the electrically discharging circuit that are accommodated in the capacitor cover 201. Therefore, it is possible to prevent the damage of the capacitor circuit 4 and the electrically discharging circuit caused by the impact more effectively.

Preferably, referring to Fig. 4, the electric compressor 110 further includes: the circuit board 146 provided with the inverter circuit 14; and the circuit board 202 provided with the electrically discharging circuit and electrically connected to the circuit board 146 via the bus bar 205. The capacitor cover 201 is configured to accommodate the circuit board 202, and the capacitor circuit 4 electrically connected to the circuit board 202 via the bus bar 203.

According to the above configuration, since the electrically discharging circuit is provided in the circuit board 202 which is different from the circuit board 146 provided with the inverter circuit 14, it is possible to accommodate the electrically discharging circuit and the capacitor circuit 4 readily in the capacitor cover 201.

Preferably, referring to Figs. 2, 5, 6A, and 6B, the power supply line PL is supplied with the DC voltage from the DC power supply B. The cutting line α is formed in the circuit board 146 between the voltage input region 230 via which the DC voltage is input to the circuit board 146 and the region 210 to which the bus bar 205 is connected. The Inverter cover 144 includes the protrusions 207A, 207B disposed at positions to face the cutting line α formed in the circuit board 146.

According to the above configuration, since the driving circuit 100 is electrically cut off from other electrical components such as a PCU and the like in the event of a collision of the vehicle, it is possible to discharge the capacitor surely.

Preferably, referring to Fig. 5, the protrusions 207A, 207B are formed integrally with the inverter cover 144.

According to the above configuration, since the protrusions 207A, 207B are formed integrally with the inverter cover 144, it is not necessary to additionally provide a process for forming the protrusions 207A, 207B on the inverter cover 144.

Preferably, the capacitor cover 201 is made of iron material.

According to the above configuration, the capacitor cover 201 has high fracture strength and therefore can withstand a larger collision load, thereby preventing the damage of the capacitor circuit 4 and the electrically discharging circuit.

Preferably, the electrically discharging circuit includes the bleeder resistance circuit 6.

According to the above configuration, a circuit design is facilitated by using the bleeder resistance circuit 6 as the electrically discharging circuit.

Preferably, the electrically discharging circuit further includes the electrically discharging resistor, connected in parallel with the bleeder resistance circuit 6, for adjusting a discharge time of the capacitor circuit 4.

According to the above configuration, by further providing the electrically discharging resistor capable of adjusting the discharge time as the electrically discharging circuit, it is possible to reduce the discharge time even when the capacitance of the capacitor is relatively large.

Although the present invention has been described and illustrated in detail, it is clearly understood that the same is by way of illustration and example only and is not to be taken by way of limitation, the scope of the present invention being interpreted by the terms of the appended claims.

An electric compressor (110) capable of discharging electric charges of a capacitor (C1, C2) is provided. The electric compressor (110) includes: a compressing unit (115); an electric motor (116) for rotating the compressing unit (115); a driving circuit (100) for driving the electric motor (116); a housing (112) for accommodating the compressing unit (115) and the electric motor (116); and an inverter cover (144) for accommodating the driving circuit (100). An outline of the electric compressor (110) is formed by the housing (112) and the inverter cover (144). The driving circuit (100) includes: an inverter circuit (14) for receiving electric power from a power supply line (PL); a capacitor circuit (4) connected between the power supply line (PL) and a ground line (SL); and an electrically discharging circuit, connected to the capacitor circuit (4), for discharging electric charges accumulated in the capacitor circuit (4). The electric compressor (110) further includes a capacitor cover (201), disposed inside the inverter cover (144), for encompassing and accommodating at least the capacitor circuit (4) and the electrically discharging circuit.

## Claims

1. An electric compressor (110) comprising:
a compressing unit (115);
an electric motor (116) for rotating the compressing unit (115);
a driving circuit (100) for driving the electric motor (116);
a housing (112) for accommodating the compressing unit (115) and the electric motor (116); and
an inverter cover (144) for accommodating the driving circuit (100),
an outline of the electric compressor (110) being formed by the housing (112) and the inverter cover (144),
the driving circuit (100) including:
an inverter circuit (14) for receiving electric power from a power supply line (PL);
a capacitor (C1, C2) connected between the power supply line (PL) and a ground line (SL); and
an electrically discharging circuit, connected to the capacitor (C1, C2), for discharging electric charges accumulated in the capacitor (C1, C2),
the electric compressor (110) further comprising a capacitor cover (201), disposed inside the inverter cover (144), for encompassing and accommodating at least the capacitor (C1, C2) and the electrically discharging circuit.

2. The electric compressor (110) according to claim 1, wherein:
the housing (112) is made of metal; and
the capacitor cover (201) has fracture strength higher than fracture strength of the housing (112).

3. The electric compressor (110) according to claim 1 or 2, wherein the capacitor cover (201) and the inverter cover (144) are disposed with a space therebetween.

4. The electric compressor (110) according to any one of claims 1 to 3, further comprising:
a first circuit board (146) provided with the inverter circuit (14); and
a second circuit board (202) provided with the electrically discharging circuit and electrically connected to the first circuit board (146) via a first connection member (205),
wherein the capacitor cover (201) is configured to accommodate the second circuit board (202) and the capacitor (C1, C2) electrically connected to the second circuit board (202) via a second connection member (203).

5. The electric compressor (110) according to claim 4, wherein:
the power supply line (PL) is supplied with a DC voltage from a DC power supply (B);
a cutting line (α) is formed in the first circuit board (146) between a voltage input region (230) via which the DC voltage is input to the first circuit board (146) and a region (210) to which the first connection member (205) is connected; and
the inverter cover (144) includes a protrusion (207A, 207B) disposed at a position to face the cutting line (α) formed in the first circuit board (146).

6. The electric compressor (110) according to claim 5, wherein the protrusion (207A, 207B) is formed integrally with the inverter cover (144).

7. The electric compressor (110) according to any one of claims 1 to 6, wherein the capacitor cover (201) is made of iron material.

8. The electric compressor (110) according to any one of claims 1 to 7, wherein the electrically discharging circuit includes a bleeder resistor (R2, R3).

9. The electric compressor (110) according to claim 8, wherein the electrically discharging circuit further includes an electrically discharging resistor, connected in parallel with the bleeder resistor (R2, R3), for adjusting a discharge time of the capacitor (C1, C2).
